# EUROPEAN PATENT APPLICATION

(11) **EP 1 868 378 A1**
(43) Date of publication of application: **19.12.2007**
(21) Application number: 06115585.9
(22) Date of filing: 16.06.2006
(51) Int. Cl.: H04N 5/44, H04N 5/50

(54) **Receiver with the capability of blind channel searching**

(71) Applicant: Ali Corporation, 114, Taipei (TW)
(72) Inventor: Chen, Yueyong, Jhuhai City, Kuandong Province (CN); Yuan, Shun, Jhuhai City, Kuandong Province (CN)
(74) Representative: Patentanwälte Kewitz & Kollegen

(57) **Abstract**

A receiver with the capability of blind channel searching comprises a tuner, a demodulation device, a first memory device, a second memory device, a control unit, and application. The control unit directs the tuner to scan a frequency to receive RF signals in the frequency range. The demodulation device generates baseband data comprising information about the received RF signals. The baseband data is stored in the first memory device. The control unit accesses the baseband data stored in the first memory device and executes the application estimating possible channel parameters on the basis of the baseband data. According to the possible channel parameters, the control unit directs the demodulation device to lock on to the channels in the frequency range and to evaluate channel parameters. The control unit stores the channel parameters into the second memory device for future use.

## Description

### BACKGROUND OF THE INVENTION

### Field of the Invention

The invention relates to signal receivers, and in particular to receivers with the capability of hybrid software/hardware blind channel searching.

### Description of the Related Art

It is desirable for RF signal receivers to have the capability of blind channel searching to automatically locate signal channels in a frequency range. Receivers require channel parameters, including center frequency, symbol rate, and modulation type, of channels. In conventional channel parameter searching, the receiver attemps a considerable number of combinations. Consequently, conventional channel parameter searching takes an unacceptably long time.

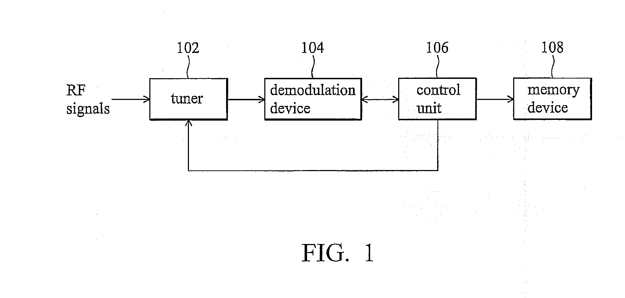

Fig. 1 shows a conventional receiver. A control unit 106 is adapted to control the tuner 102 to scan a frequency range in various frequency steps, and to control the demodulation device 104 to try to demodulate the received signal in various symbol rates and all supported modulation types. Once the demodulation device 104 provides an indication to the control unit 106 that it has locked on to the channel, the corresponding channel parameters, comprising the central frequency, the actual symbol rate, and the actual modulation type of the channel, can be found by the demodulation device 104 and stored in the memory device 108. The memory device 108 is operative to store the channel parameters of every channel.

The search time of the conventional receiver of Fig. 1 is dependent on the size of the frequency steps and the way of choosing the possible symbol rates. Generally, the search time can be improved with the bigger freqeuncy step and the appropriate symbol rate adopted in the blind channel searching procedure. Unite States patent US 2006/ 0037059 A1 discloses a FFT based blind search algorithm. This algorithm reduces search time by calculating an estimated central frequency and an estimated symbol rate by means of FFT and filtering. However, a fix implementation of this algorithm will suffer from signal distortion. So we need a flexible architecture to allow us to change the components (such as filter design and FFT length) of the algorithm, or even use a non-FFT algorithm if needed.

### BRIEF SUMMARY OF THE INVENTION

The invention provides receivers with the capability of hybrid software/hardware blind channel searching. The receiver comprises a tuner, a demodulation device, a first memory device, a second memory device, a control unit, and application estimating possible channel parameters. The control unit directes the tuner to scan a frequency range to receive RF signals therein. The demodulation device generates baseband data comprising information about the received RF signals. The baseband data is stored in the first memory device. The control unit accesses the baseband data stored in the first memory device and executes the application to estimate possible channel parameters on the basis of the baseband data. According to the possible channel parameters, the control unit directs the demodulation device to lock on to the channels in the frequency range and evaluate channel parameters. The control unit stores the evaluated channel parameters into the second memory device for future use.

The demodulation device further comprises an analog-to-digital converter generating digital baseband signals of the received RF signals, a third memory device storing the digital baseband signals, and a DMA channel transmitting the signals stored in the third memory device to the first memory device. The signals stored in the third memory device are baseband data. The demodulation device further comprises a multiplexer and a decimation filter generating decimated digital basedband signals. The digital baseband signals and the decimated digital basedband signals are selected by the multiplexer and transmitted to the third memory device. After the stored baseband data is transmitted to the first memory device, the demodulation device further generates an interrupt signal to direct the control unit to access the baseband data stored in the first memory device immediately. The third memory device is implemented as an SRAM operating in ping-pong mode. The demodulation device further comprises registers. The control unit also accesses the baseband data stored in the third memory device via the registers. The application carries out frequency domain analysis of the baseband data stored in the first memory device. The first memory device is implemented as a SDRAM. The demodulation device further demodulates the received RF signals into a transport stream.

The invention also provides a method for blind channel searching, comprising scanning a frequency range and receiving RF signals in the frequency range, demodulating the received RF signals to generate baseband data comprising information about the received RF signals, storing the baseband data in a first memory device, executing an application for estimating possible channel parameters based on the baseband data stored in the first memory device, locking on to channels in the frequency range according to the possible channel parameters and estimating channel parameters, and storing the channel parameters in a second memory device for future use. The application is executed by a control unit.

Generation of baseband data further comprises generating digital baseband signals according to the received RF signals, generating decimated digital basedband signals by decimating the digital baseband signals, storing the digital baseband signals and the decimated digital basedband signals in a third memory device, and transmitting the signals stored in the third memory device to the first memory device. The signals stored in the third memory device are the baseband data. The method further comprises generating an interrupt signal to direct the control unit to access the baseband data stored in the first memory device immediately after transmitting the baseband data stored in the third memory device to the first memory device. The third memory device, implemented as an SRAM operating in a ping-pong mode, stores the digital baseband signals or the decimated digital basedband signals. The method further comprises accessing the baseband data stored in the third memory device via registers.

### BRIEF DESCRIPTION OF THE DRAWINGS

The invention can be more fully understood by reading the subsequent detailed description and examples with references made to the accompanying drawings, wherein:

Fig. 1 shows a conventional receiver;

Fig. 2 shows a receiver of the invention;

Fig. 3 shows operation of a block of a demodulation device;

Fig. 4 is a flowchart of a method of blind channel searching of the invention; and

Fig. 5 is a flowchart of step 404 of Fig. 4.

### DETAILED DESCRIPTION OF THE INVENTION

The following description is of the best-contemplated mode of carrying out the invention. This description is made for the purpose of illustrating the general principles of the invention and should not be taken in a limiting sense. The scope of the invention is best determined by reference to the appended claims.

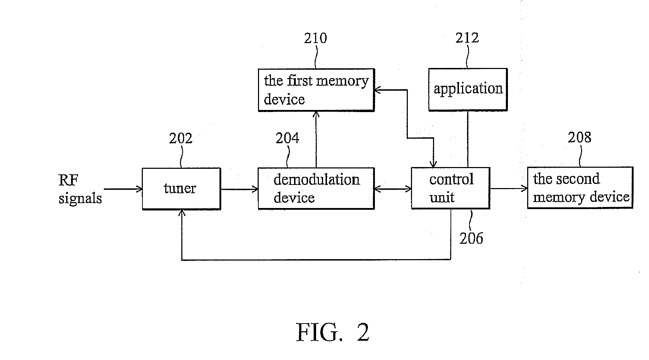

Fig. 2 shows a receiver of the invention. A control unit 206 directs a tuner 202 to scan a frequency to receive RF signals in a frequency range. A demodulation device 204 generates baseband data comprising information about the received RF signals and stores the baseband data in a first memory device 210. The control unit 206 accesses the baseband data stored in the first memory device 210 and executes application 212 to estimate possible channel parameters on the basis of the baseband data. Possible channel parameters include possible center frequencies or possible symbol rates of the channels in the frequency range. According to the possible channel parameters, the control unit 206 directs the demodulation device 204 to lock on to the channels and evaluate channel parameters. Control unit 206 stores the channel parameters into the second memory device 208 for future use.

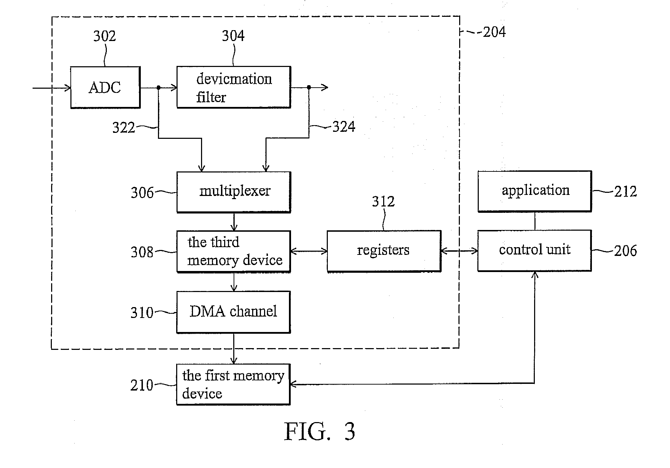

Fig. 3 shows operation of a block of a demodulation device. The demodulation device 204 further comprises an analog-to-digital converter 302 generating digital baseband signals 322 of the received RF signals, a decimation filter 304 generating decimated digital basedband signals 324 by decimating the digital baseband signals 322, a multiplexer 306, a third memory device 308 storing the baseband data, and a DMA (direct memory access) channel 310 transmitting the signals stored in the third memory device 308 to the first memory device 210. The digital baseband signals 322 and the decimated digital basedband signals 324 are selected by the multiplexer 306 and transmitted to the third memory device 308. After the baseband data (322, 324) stored in the third memory device 308 is transmitted to the first memory device 210, the demodulation device 204 further generates an interrupt signal (not shown) to direct the control unit 206 to access the baseband data stored in the first memory device 210 immediately. The third memory device 308 is implemented as an SRAM operating in ping-pong mode. The demodulation device 204 further comprises registers 312, and the control unit 206 accesses the baseband data stored in the third memory device 308 via the registers 312. The application 212 carries out frequency domain analysis of the baseband data stored in the first memory device 210. The first memory device 210 is implemented as a SDRAM.

The receiver shown can be part of an integrated receiver decoder receiving DVB (Digital Video Broadcasting) signals from a cable network or satellite antenna or terrestrial antenna. In a normal mode, the demodulation device 204 demodulates the received RF signals into a transport stream (not shown) based on the channel parameters stored in the second memory device 208.

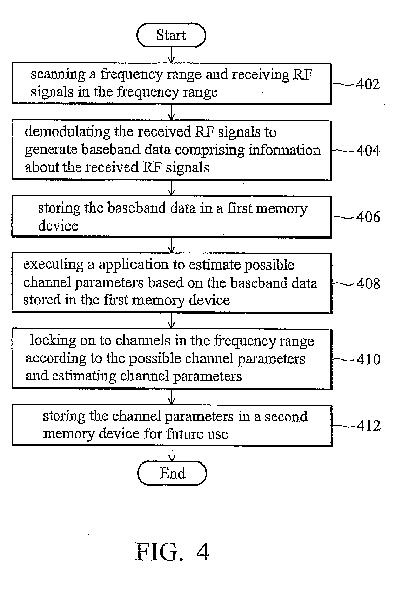

Fig. 4 is a flowchart of a method of blind channel searching of the invention, comprising scanning a frequency range and receiving RF signals in the frequency range (step 402), demodulating the received RF signals to generate baseband data comprising information about the received RF signals (step 404), storing the baseband data in a first memory device (step 406), executing a application to estimate possible channel parameters based on the baseband data stored in the first memory device (step 408), locking on to channels in the frequency range according to the possible channel parameters and estimating channel parameters (step 410), and storing the channel parameters in a second memory device for future use (step 412).

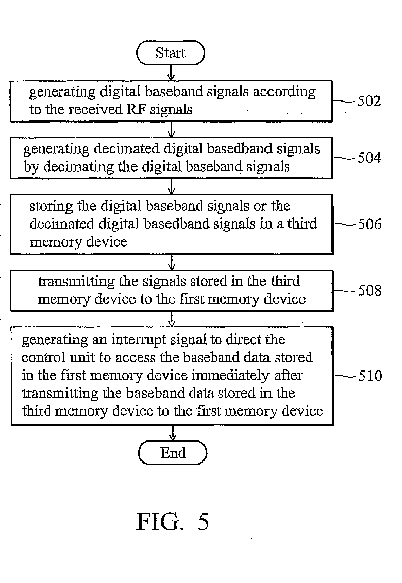

Fig. 5 is a flow chart of step 404 of Fig. 4, further comprising generating digital baseband signals according to the received RF signals (step 502), generating decimated digital basedband signals by decimating the digital baseband signals (step 504), storing the digital baseband signals or the decimated digital basedband signals in a third memory device (step 506), transmitting the signals stored in the third memory device to the first memory device (step 508), and generating an interrupt signal to direct the control unit to access the baseband data stored in the first memory device immediately after transmitting the baseband data stored in the third memory device to the first memory device (step 510). Step 504 can be ignored when the digital baseband signal is the only signal used for blind channel searching.

While the invention has been described by way of example and in terms of preferred embodiment, it is to be understood that the invention is not limited thereto. To the contrary, it is intended to cover various modifications and similar arrangements (as would be apparent to those skilled in the art). Therefore, the scope of the appended claims should be accorded the broadest interpretation so as to encompass all such modifications and similar arrangements.

## Claims

1. A receiver with the capability of blind channel searching, comprising:
a tuner receiving RF signals in a frequency range;
a demodulation device, generating baseband data comprising information about the received RF signals and evaluating channel parameters by locking on to channels in the frequency range;
a first memory device storing the baseband data;
a second memory device;
a control unit, directing the tuner to scan the frequency range, accessing the baseband data stored in the first memory device, estimating possible channel parameters, directing the demodulation device to lock on to the channels according to the possible channel parameters, and storing the channel parameters evaluated by the demodulation device into the second memory device; and
an application executed by the control unit to estimate the possible channel parameters on the basis of the baseband data.

2. The receiver according to claim 1, wherein the demodulation device further comprises:
an analog-to-digital converter generating digital baseband signals of the received RF signals;
a third memory device storing the digital baseband signals; and
a DMA channel transmitting the signals stored in the third memory device to the first memory device, wherein the signals stored in the third memory device are the baseband data.

3. The receiver according to claim 2, wherein the demodulation device further comprises a multiplexer and a decimation filter generating decimated digital basedband signals, wherein the digital baseband signals or the decimated digital basedband signals are selected by the multiplexer and transmitted to the third memory device.

4. The receiver according to claim 3, wherein, after the baseband data stored in the third memory device is transmitted to the first memory device, the demodulation device further generates an interrupt signal to request the control unit to access the baseband data stored in the first memory device immediately.

5. The receiver according to claim 3, wherein the third memory device is implemented as an SRAM operating in ping-pong mode.

6. The receiver according to claim 3, the demodulation device further comprising registers, via which the control unit accesses the baseband data stored in the third memory device.

7. The receiver according to claim 1, wherein the application carries out frequency domain analysis of the baseband data stored in the first memory device.

8. The receiver according to claim 1, wherein the first memory device is implemented as a SDRAM.

9. The receiver according to claim 1, the demodulation device further demodulating the received RF signals into a transport stream.

10. A method for blind channel searching, comprising:
scanning a frequency range and receiving RF signals in the frequency range;
demodulating the received RF signals to generate baseband data comprising information about the received RF signals;
storing the baseband data in a first memory device;
executing a application for estimating possible channel parameters based on the baseband data stored in the first memory device, wherein the application is executed by a control unit;
locking on to channels in the frequency range according to the possible channel parameters, and estimating channel parameters; and
storing the channel parameters in a second memory device.

11. A method according to claim 10, wherein generation of the RF data further comprises
generating digital baseband signals according to the received RF signals;
generating decimated digital basedband signals;
storing the digital baseband signals or the decimated digital basedband signals in a third memory device; and
transmitting the signals stored in the third memory device to the first memory device, wherein the signals stored in the third memory device are the baseband data.

12. The method according to claim 11 further comprising generating an interrupt signal to direct the control unit to access the baseband data stored in the first memory device immediately after transmitting the baseband data stored in the third memory device to the first memory device.

13. The method according to claim 11, wherein the third memory device is implemented as an SRAM operating in ping-pong mode.

14. The method according to claim 11 further comprising accessing the baseband data stored in the third memory device via registers.

15. The method according to claim 10, wherein the application carries out frequency domain analysis of the baseband data stored in the first memory device.

16. The method according to claim 10, the first memory device is implemented as a SDRAM.
